# EUROPEAN PATENT APPLICATION

(11) **EP 4 588 575 A1**
(43) Date of publication of application: **23.07.2025**
(21) Application number: 23896259.1
(22) Date of filing: 08.10.2023
(51) Int. Cl.: B05C 5/02

(54) **COATING DIE AND COATING APPARATUS**

(30) Priority: 29.11.2022 CN 202223185936 U
(71) Applicant: Contemporary Amperex Technology (Hong Kong) Limited, Central (HK)
(72) Inventor: LIU, Xuyong, Ningde, Fujian 352100 (CN); PU, Jingjing, Ningde, Fujian 352100 (CN); SHANG, Hongwu, Ningde, Fujian 352100 (CN)
(74) Representative: Kraus & Lederer PartGmbB
(86) International application number: PCT/CN2023/123437
(87) International publication number: WO 2024/114103

(57) **Abstract**

The present application discloses a coating die (100) and a coating device. The coating die (100) comprises a die body (10), a plurality of driving assemblies (30) and a plurality of adjusting members (20). The die body (10) is provided with a discharge channel (11) communicated to the outside, and the die body (10) is further provided with a communicating pore (12) communicated to the discharge channel (11); the driving assemblies (30) are detachably connected to the die body (10); and at least a part of each adjusting member (20) is disposed in the discharge channel (11), the plurality of adjusting members (20) are all connected to the corresponding driving assemblies (30) through the communicating pore (120), the driving assemblies (30) are used for driving the adjusting members (20) to move in the discharge channel (11), and the plurality of adjusting members (20) are arranged in a first direction, the first direction being perpendicular to a movement direction of the adjusting members (20).

## Description

### CROSS-REFERENCE TO RELATED APPLICATIONS

The present application claims the priority to Chinese patent application no. 202223185936.5, filed on November 29, 2022 and entitled "COATING DIE AND COATING DEVICE", which is incorporated in this application by reference in its entirety.

### TECHNICAL FIELD

The present application relates to the technical field of coating devices, and in particular to a coating die.

### BACKGROUND

In order to adjust the coating thickness, coating dies of coating devices in the related technologies are usually provided with liftable adjusting members to adjust the discharge flow rate of the coating dies, thereby adjusting the coating thickness. However, the adjusting members on the coating dies of this type of coating devices are all fixed in position, and accordingly they cannot be moved and adjusted in the width direction of coatings. Therefore, the adjusting members in this type of coating devices cannot meet the needs of adjusting the thickness of coatings in different sizes, resulting in low flexibility in use of this type of coating devices.

### SUMMARY OF THE INVENTION

The main objective of the present application is to provide a coating die, aiming to improve the flexibility in use of a coating device.

In order to achieve the above objective, the coating die proposed in the present application includes:
a die body, where the die body is provided with a discharge channel communicated to the outside, and the die body is further provided with a communicating pore communicated to the discharge channel;
a plurality of driving assemblies detachably connected to the die body; and
a plurality of adjusting members, where at least a part of each adjusting member is arranged in the discharge channel, the plurality of adjusting members are all connected to the corresponding driving assemblies through the communicating pore, the driving assemblies are used for driving the adjusting members to move in the discharge channel, and the plurality of adjusting members are arranged in a first direction, the first direction being perpendicular to a movement direction of the adjusting members.

During use of the coating die in this solution, a slurry may be extruded from the discharge channel to coat a substrate, so that a coating process on the substrate is completed. Moreover, the coating die further includes a plurality of driving assemblies and a plurality of adjusting members. The adjusting members can be driven to move within the discharge channel by the corresponding driving assemblies to change the cross section of the discharge channel at that position for the slurry to pass through, and accordingly, the discharge flow rate of a corresponding area of the discharge channel in the first direction can be adjusted correspondingly to adjust the thicknesses of various areas of a coating coated on the substrate. Furthermore, the plurality of driving assembles of the coating die in this solution are all connected to the adjusting members through one communicating pore. **In** this way, in the process of making coatings in different sizes, the position of the adjusting members can be adjusted in the communicating pore so that the thickness of the coating can be adjusted normally and effectively corresponding to the size category of the coating, thereby improving flexibility in use of the coating device.

In an embodiment of the present application, at least a part of each driving assembly is disposed on an outer surface of the die body; and
the coating die further includes connectors disposed in the communicating pore, one end of each connector is connected to one adjusting member, the other end of the connector is connected to one driving assembly, and the driving assembly is used for driving the connector to move to drive the adjusting member to move.

Here, the driving member and the adjusting member are connected by means of the connector, so that an indirect connection between the driving member and the adjusting member can be realized conveniently.

In an embodiment of the present application, the driving assembly includes:
a mounting member detachably disposed on the outer surface of the die body where the communicating pore is formed; and
a driving member connected to the mounting member and one connector and used for driving the connector to move.

Here, the driving member can be mounted easily by means of the mounting member. Moreover, the mounting member can also be used to be connected to the die body, which facilitates the process of mounting the overall driving assembly on the die body.

In an embodiment of the present application, the coating die further includes a fixture, and the fixture includes:
a holder connected to the die body; and
a clamping plate detachably connected to the holder and fits with the holder to clamp the mounting members.

Here, the mounting members are clamped and mounted by means of the fixture, so that the structure and strength of the mounting members can be ensured effectively.

In an embodiment of the present application, the holder and the clamping plate enclose to form a receiving cavity, the receiving cavity extends in the first direction, and the mounting members of the respective driving assemblies are all received in the receiving cavity;
the holder is provided with a first clearance hole communicated to the receiving cavity, and one end of the connector away from the adjusting member passes through the first clearance hole to be connected to the driving member; and
the clamping plate is provided with a second clearance hole communicated to the receiving cavity, and one end of the driving member away from the connector passes through the second clearance hole to extend to the outside.

Here, the receiving cavity may have an adaptively receiving effect to the mounting members, which can improve the stability in mounting of the mounting members. The receiving cavity may also have a positioning effect to the mounting members during mounting, which is conducive to improving the convenience of mounting.

In an embodiment of the present application, in the first direction, the length value of the mounting member of each of the driving assemblies is the same as the length value of the corresponding adjusting member.

Here, the mounting members and the adjusting members are in one-to-one correspondence and have the same length value, which can ensure that the driving members disposed on the mounting members may accurately correspond to the adjusting members to play a role in adjustment. Moreover, it is also convenient for operators to quickly determine the driving member to be operated according to the corresponding relationship, so as to adjust the adjusting member to be adjusted.

In an embodiment of the present application, the driving member and the connector are detachably connected.

Here, the driving member and the connector may be detached from each other, which is conducive to further improving the convenience of maintenance or change of the respective adjusting members and driving members.

In an embodiment of the present application, the mounting member is provided with a mounting hole, the driving member rotatably penetrates the mounting hole, and one of a threaded section and a threaded hole is formed at one end of the driving member close to the adjusting member; and
the other of the threaded section and the threaded hole is formed at one end of the connector away from the adjusting member, and the threaded section is inserted into the threaded hole to drive the connector to move during rotation of the driving member.

Here, the driving member and the connector are connected by threads, which simplifies the structure of the driving member, thus improving the convenience of manufacturing of the driving member. Moreover, the driving member and the connector realize drive based on the pure mechanical structure, which does not involve electrical circuits or gas circuits, and accordingly is conducive to improving safety of the coating die in use.

In an embodiment of the present application, the driving member is provided with the threaded section, and the connector is provided with the threaded hole;
the mounting member is further provided with a guide hole, the guide hole is communicated to the mounting hole and is coaxial with the mounting hole, and the end of the connector provided with the threaded hole is inserted into the guide hole.

Here, the guide hole may guide the movement of the connector, so that the adjusting member connected to the connector can adjust the discharge flow rate of the discharge channel stably and effectively.

In an embodiment of the present application, the movement direction of the adjusting member is perpendicular to a discharge direction of the discharge channel, and the first direction is perpendicular to the discharge direction of the discharge channel.

Here, the adjusting member may have a relatively small displacement, which is conducive to improving the convenience of its setting. Moreover, even when the adjusting member moves a small distance, the adjusting member can adjust the discharge flow rate of the discharge channel effectively.

In an embodiment of the present application, a mounting groove is provided on an inner wall of the discharge channel and communicated to the communicating pore, and the adjusting members are disposed in the mounting groove.

Here, the mounting groove may provide a mounting space to the adjusting members, thus improving the convenience of setting the adjusting members. Moreover, the adjusting member may have a large volume, so that the strength of the adjusting member is increased and the adjusting member can carry out the adjustment stably in the follow-up process.

In an embodiment of the present application, the coating die assembly further includes a sealing member, and the sealing member is disposed between the adjusting member and a wall of the mounting groove that is communicated to the communicating pore.

Here, the sealing member may have a sealing effect, and by the sealing effect of the sealing member, the slurry can be prevented from further permeating the communicating pore even if the slurry enters the mounting groove.

In an embodiment of the present application, the coating die includes:
a first die; and
a second die detachably connected to the first die, the second die and the first die enclosing to form the discharge channel, and the driving assemblies and the communicating pore being arranged on the first die and/or the second die.

Here, the first die and the second die may be manufactured separately and then assembled into a whole. Structures of the first die and the second die that are manufactured separately can be simplified, which is conducive to improving the convenience in manufacturing the die body. Here, since the first die and the second die are detachably connected, when the adjusting member is damaged or the discharge channel is blocked, the first die and the second die can be detached from each other, thereby improving the convenience of maintenance of the adjusting member and the discharge channel.

The present application further proposes a coating device, including a coating die as in any one of the above embodiments.

### BRIEF DESCRIPTION OF THE DRAWINGS

To describe the technical solutions in the embodiments of the present application or in the prior art more clearly, the following briefly describes the accompanying drawings required for describing the embodiments or the prior art. Apparently, the accompanying drawings in the following description show merely some of the embodiments of the present application, and those of ordinary skill in the art may still derive other drawings from the structures illustrated in these accompanying drawings without creative efforts.
FIG. 1 is a schematic structural diagram of a coating die without a clamping plate according to an embodiment of the present application;
FIG. 2 is a sectional diagram of the coating die according to the present application;
FIG. 3 is a partial schematic structural diagram of the coating die according to the present application;
FIG. 4 is an exploded diagram of a fixture and driving assemblies of the coating die according to the present application;
FIG. 5 is a partial schematic structural diagram of a holder of the fixture of the coating die according to the present application;
FIG. 6 is an exploded diagram of a driving assembly, a connector and an adjusting member of the coating die according to the present application; and
FIG. 7 is a schematic structural diagram of a die body of the coating die according to the present application.

### Description of reference signs:

| Reference numerals | Name | Reference numerals | Name |
|---|---|---|---|
| 100 | Coating die | 313 | Guide hole |
| 10 | Die body | 33 | Driving member |
| 11 | Discharge channel | 331 | Threaded section |
| 111 | Discharge port | 40 | Connector |
| 114 | Mounting groove | 41 | Threaded hole |
| 12 | communicating pore | 50 | Sealing member |
| 13 | First die | 60 | Fixture |
| 15 | Second die | 61 | Holder |
| 20 | Adjusting member | 611 | First clearance hole |
| 30 | Driving assembly | 63 | Clamping plate |
| 31 | Mounting member | 631 | Second clearance hole |
| 311 | Mounting hole | 65 | Receiving cavity |

The implementation of the objective, functional features and advantages of the present application will be further described in combination with embodiments and with reference to the accompanying drawings.

### DETAILED DESCRIPTION

The technical solutions in the embodiments of the present application will be clearly and completely described below with reference to the accompanying drawings of the embodiments of the present application. Apparently, the embodiments described are merely some rather than all of the embodiments of the present application. On the basis of the embodiments of the present application, all other embodiments obtained by those of ordinary skill in the art without involving any inventive effort shall fall within the scope of protection of the present application.

It should be noted that all directional indications (such as up, down, left, right, front, back ...) in the embodiments of the present application are only configured to explain the relative positional relationship and movement between components in a certain posture (as shown), and when the specific posture changes, the directional indications also change accordingly.

In the present application, unless otherwise explicitly specified and limited, the terms such as "connection" and "fixation" should be broadly understood. For example, the term "fixation" may be a fixed connection or a detachable connection or be integrated; or may be a mechanical connection or an electrical connection; or may be a direct connection or an indirect connection through an intermediate medium, or may be a communication between the interior of two elements or the interaction of two elements, unless otherwise specifically defined. For those of ordinary skill in the art, the specific meanings of the above terms in the present application can be understood according to specific situations.

In addition, the descriptions involving "first", "second", and the like in the present application are used for description only and cannot be construed as indicating or implying relative importance thereof or implicitly indicating the number of technical features indicated. Therefore, the features defined with "first" and "second" may explicitly or implicitly include at least one of the features. In addition, the meaning of "and/or" herein includes three parallel solutions. Taking "A and/or B" as an example, it includes solution A, solution B, or a solution satisfying both of A and B. In addition, the technical solutions of the various embodiments may be combined with each other, but should be based on what may be implemented by those of ordinary skill in the art. When a combination of technical solutions is contradictory or cannot be implemented, it should be considered that the combination of technical solutions does not exist, and is not within the scope of protection of the present application.

The applicant has found that in many coating processes, for example, in the production process of batteries, it is usually necessary to use a coating device to coat a prepared paste-like viscous slurry on a substrate. However, in the actual coating process, the edge of the coating slurry is prone to the edge effect, that is, the thickness of edge areas on both sides of a coating formed by the slurry is greater than the thickness of a middle area. Here, the inconsistent thickness of the coating on the substrate will affect the battery capacity and other performance, resulting in an impact on the subsequent use of the batteries. Therefore, in order to ensure the stable and normal use of the batteries subsequently, it is necessary to control the thinning of the slurry coating on the substrate during the coating process. In the related technologies, in order to adjust the coating thickness, coating dies of coating devices in the related technologies are usually provided with movable adjusting members to adjust the discharge flow rate of the coating dies by driving the adjusting members to lift and fall in the discharge channel, thereby realizing adjustment of the coating thickness. However, the adjusting members on the coating dies of this type of coating devices are all fixed in position, and accordingly they cannot be moved and adjusted in the width direction of coatings. Therefore, the adjusting members in this type of coating devices cannot meet the needs of adjusting the thickness of coatings of different sizes, resulting in low flexibility in use of this type of coating devices.

Based on the above considerations, in order to improve the flexibility in use of the coating devices, the applicant proposed a novel coating die, in which a plurality of driving assemblies are connected to corresponding adjusting members through a communicating pore, so that for different coating sizes, the requirements of different coating sizes can be met by adjusting the position of the adjusting members.

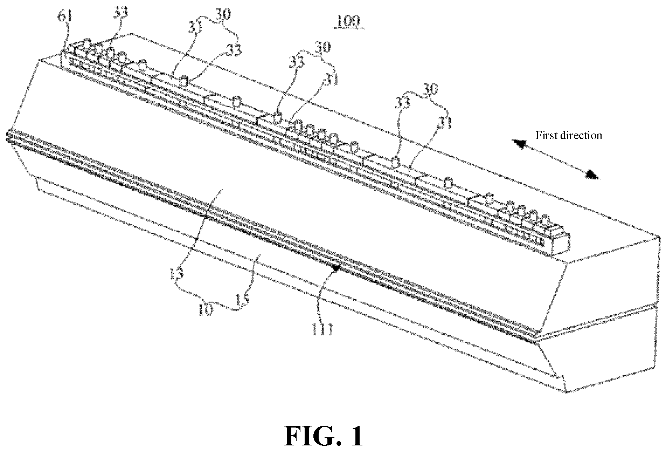

In an embodiment of the present application, referring to FIGS. 1 to 4, the coating die 100 includes a die body 10, a plurality of adjusting members 20, and a plurality of driving assemblies 30. The die body 10 is provided with a discharge channel 11 communicated to the outside, and the die body 10 is further provided with a communicating pore 12 communicated to the discharge channel 11; the driving assemblies 30 are detachably connected to the die body 10; and at least a part of each adjusting member 20 is disposed in the discharge channel 11, the plurality of adjusting members 20 are all connected to the corresponding driving assemblies 30 through the communicating pore 12, the driving assemblies 30 are used for driving the adjusting members 20 to move in the discharge channel 11, and the plurality of adjusting members 20 are arranged in a first direction, the first direction being perpendicular to a movement direction of the adjusting members 20.

The die body 10 may be used as the main structure of the coating die 100 for forming the discharge channel 11, and for mounting of the driving assemblies 30 and the adjusting members 20 and the like. The discharge channel 11 has a feed port and a discharge port 111. A slurry to be coated may enter the discharge channel 11 from the feed port and then be extruded from the discharge port 111 onto a substrate, so that a coating process on the substrate is completed. Therefore, the discharge channel 11 is a flow channel for the slurry to be coated. The feed port may be a circular hole or a square hole, etc., and the present application does not impose any specific limitation on this. Since the coated substrate usually has a large width, the discharge port 111 may extend as a strip in a width direction of the substrate, i.e., extend in the first direction. Here, correspondingly, the die body 10 may also be of an elongated structure extending in the first direction, which is conducive to forming the strip-shaped discharge port 111 in its length direction. The present application is not limited thereto. In other embodiments, the die body 10 may be of a roughly box structure. The communicating pore 12 may be used for passage of the driving assemblies 30 and/or the adjusting members 20 to realize a connection between the driving assemblies and the adjusting members 20. Furthermore, the number of the communicating pore 12 is one.

The driving assembly 30 may be used for driving the adjusting member 20 to move. The driving assembly 30 may be of a structure having a threaded section 331 or a threaded hole 41 as mentioned below, so that manual driving on the adjusting member 20 can be realized through the matching between the threaded section 331 and the threaded hole 41. The present application is not limited thereto. In other embodiments, the driving assembly 30 may also be a cylinder or a linear motor, etc., for realizing automatic driving on the adjusting member 20. In addition, the driving assembly 30 may be disposed on the inner side of the die body 10, or may be disposed on the outer side of the die body 10, as long as it can be connected to the corresponding adjusting member 20 through the communicating pore 12. The driving assembly 30 may be detachably mounted in a way of being clamped by a holder 61 and a clamping plate 63 that are connected detachably as mentioned below. The driving assembly 30 may also be connected to the die body 10 by screws, snap fit, or magnetic adsorption, etc., as long as it is ensured that the driving assembly 30 can be detached from the die body 10.

The adjusting member 20 can be used for adjusting the discharge flow rate of the discharge channel 11. Specifically, when the adjusting member 20 is driven to move by the driving assembly 30, at least a part of the adjusting member 20 is located in the discharge channel 11. In this way, during the movement of the adjusting member 20, the cross section of the discharge channel 11 at that position for the slurry to pass through can be adjusted. For example, if an adjusting member 20 is driven downward by the corresponding driving assembly 30, the cross section of an area of the discharge channel 11 corresponding to the adjusting member 20 is reduced, and the flow rate of the slurry passing through that position can also be reduced, and accordingly, the coating thickness of the coating area on the substrate corresponding to the adjusting member 20 can also be reduced. When the adjusting member 20 moves upward, the cross section of the area of the discharge channel 11 corresponding to the adjusting member 20 is increased, so that the flow rate of the slurry passing through that position is also increased, and accordingly, the coating thickness of the coating area on the substrate corresponding to the adjusting member 20 can also be increased. Therefore, the thickness of the coating in the corresponding areas on the substrate can be adjusted by driving different adjusting members 20 to move. The adjusting member 20 may be only partially disposed in the discharge channel 11; and the adjusting member 20 may also be entirely disposed in the discharge channel 11. Alternatively, the adjusting member 20 is entirely disposed outside the discharge channel 11 to ensure that, when being driven to move by the driving assembly 30 subsequently, the adjusting member 20 can move into the discharge channel 11 to adjust the flow rate of the slurry. In addition, the adjusting member 20 may be of a block structure, a plate structure or a column structure, etc., as long as it can adjust the discharge flow rate of the discharge channel 11 during movement. In addition, the movement direction of the adjusting member 20 may be perpendicular to a discharge direction of the discharge channel 11, and the first direction is perpendicular to the discharge direction of the discharge channel 11. In this way, the adjusting member 20 may have a relatively small displacement, which is conducive to improving the convenience to drive and provide the adjusting member. Moreover, even when the adjusting member 20 moves a small distance, it can adjust the cross section of the discharge channel 11 at that position corresponding thereto for the slurry to pass through, so as to adjust the discharge flow rate of the discharge channel 11 effectively. It should be noted that the movement direction of the adjusting member 20 and the discharge direction of the discharge channel 11 may also be set at an acute angle or an obtuse angle.

During use of the coating die 100 in this solution, the slurry may be extruded from the discharge channel 11 to coat the substrate, so that a coating process on the substrate is completed. Moreover, the coating die 100 further includes a plurality of driving assemblies 30 and a plurality of adjusting members 20. The adjusting members 20 can be driven to move within the discharge channel 11 by the corresponding driving assemblies 30 to change the cross section of the discharge channel 11 at that position for the slurry to pass through, and accordingly, the discharge flow rate of a corresponding area of the discharge channel 11 in the first direction can be adjusted correspondingly to adjust the thicknesses of various areas of a coating coated on the substrate. Furthermore, the driving assembly 30 of the coating die 100 in this solution is detachably connected to the die body 10, so that it can be easily replaced. In addition, the plurality of driving assembles 30 of the coating die 100 in this solution are all connected to the adjusting members 20 through one communicating pore 12. In this way, in the process of making coatings in different sizes, the position of the adjusting member 20 can be adjusted in the communicating pore 12 so that the thickness of the coating can be adjusted normally and effectively corresponding to the size category of the coating, thereby improving flexibility in use of the coating device.

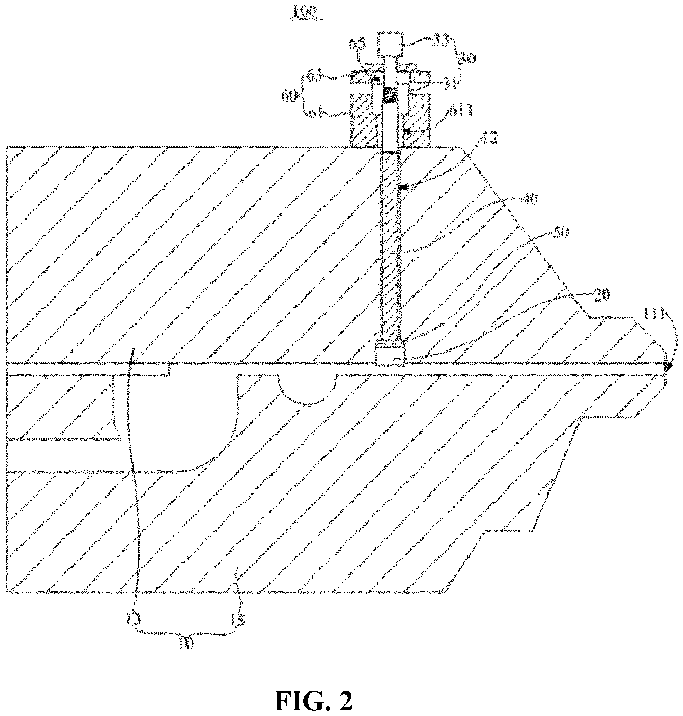

With reference to FIGS. 2, 4 and 6, in some embodiments of the present application, at least a part of each driving assembly 30 is disposed on an outer surface of the die body 10; the coating die 100 further includes connectors 40, the connectors 40 are disposed in the communicating pore 12 ; one end of each connector 40 is connected to one adjusting member 20, the other end of the connector 40 is connected to one driving assembly 30, and the driving assembly 30 is used for driving the connector 40 to move to drive the adjusting member 20 to move.

At least a part of the driving assembly 30 is disposed on the outer surface of the die body 10, which means that the driving assembly 30 may be partially located outside the die body 10, or may be entirely located outside the die body 10, so that the driving assembly can be exposed to the outside. Herein, the driving assembly 30 may be a cylinder or a linear motor, etc., for realizing automatic driving on the adjusting member 20. It may also be of a structure having a threaded section 331 or a threaded hole 41 as mentioned below, so that manual driving on the adjusting member 20 can be realized through the matching between the threaded section 331 and the threaded hole 41. The communicating pore 12 may be communicated to the discharge channel 11, thus facilitating passage of the connector 40. That is, the driving assembly 30 and the adjusting member 20 are connected to opposite ends of the connector 40, respectively. Here, after the driving assembly 30 drives the connector 40 to move, it may drive the adjusting member 20 connected to the connector 40 to move, thereby realizing indirect driving on the adjusting member 20 in the discharge channel 11 by the driving assembly 30 located outside the die body 10. Moreover, the number of the connectors 40 corresponds to that of the driving assemblies 30 and the adjusting members 20 respectively, and a plurality of connectors 40 are arranged side by side in one communicating pore 12.

In this embodiment, at least a part of the driving assembly 30 is disposed on the outer surface of the die body 10, so that it is easy to perform driving adjustment on the driving assembly 30. Moreover, it may also facilitate subsequent maintenance and other operations of the driving assembly 30. It should be noted that the present application is not limited thereto. **In** other embodiments, the driving assembly 30 may also be entirely disposed within the die body 10, i.e., disposed within a receiving space communicated to the discharge channel 11. Furthermore, the driving assembly 30 and the adjusting member 20 are connected by means of the connector 40 to realize an indirect connection between the driving assembly 30 and the adjusting member 20, so that the driving assembly 30 and the adjusting member 20 in the die body 10 do not need to be set more complicated due to a large distance between the two. It should be noted that the present application is not limited thereto. In other embodiments, it is also possible that a part of the structure of the driving assembly 30 passes through the communicating pore 12 to be connected to the adjusting member 20. Alternatively, it is also possible that a part of the structure of the adjusting member 20 passes through the communicating pore 12 to be connected to the driving assembly 30.

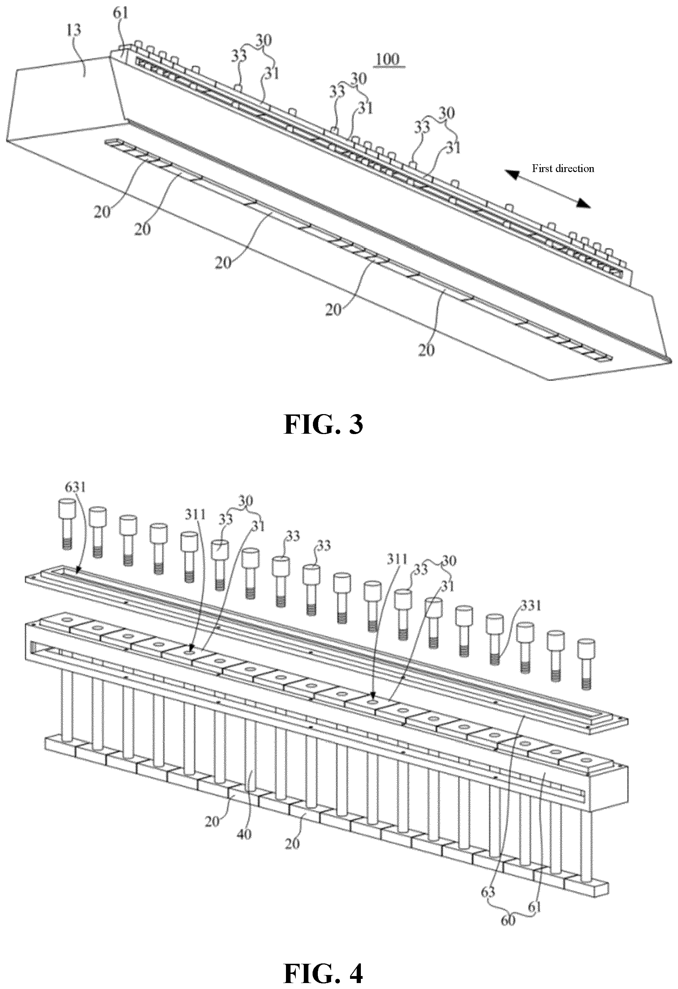

With reference to FIGS. 2 and 4, in an embodiment of the present application, the driving assembly 30 includes a mounting member 31 and a driving member 33. The mounting member 31 is detachably disposed on the outer surface of the die body 10 where the communicating pore 12 is formed; the driving member 33 is connected to the mounting member 31 and the connector 40, and the driving member 33 is used for driving the connector 40 to move.

The mounting member 31 may be used for providing a mount position to facilitate the mounting of the driving member 33. Moreover, the mounting member 31 may also be used to be connected to the die body 10 to realize mounting the driving assembly 30 on the die body 10. Herein, the mounting member 31 may also be of a plate structure, or a column structure, or a frame structure enclosed by a plurality of plates, etc. The present application does not limit the specific structural shape of the mounting member 31, as long as the mounting member 31 can be used for mounting the driving member 33 and is connected to the die body 10. The driving member 33 may be used for driving the connector 40 to move, and may be, for example, a cylinder, a linear motor, or may be of a structure having a threaded section 331 or a threaded hole 41.

In this embodiment, the mounting member 31 may be connected to the die body 10, so that it is convenient to provide a corresponding connecting structure on the mounting member 31 to improve the convenience in mounting the driving assembly 30 on the die body 10. It should be noted that the present application is not limited thereto. In other embodiments, the driving member 33 may also be directly disposed on the die body 10.

With reference to FIGS. 2 and 4, in an embodiment of the present application, the coating die 100 further includes a fixture 60, the fixture 60 includes a holder 61 and a clamping plate 63, the holder 61 is connected to the die body 10; the clamping plate 63 is detachably connected to the holder 61 and fits with the holder 61 to clamp the mounting members 31.

Both the holder 61 and the clamping plate 63 may extend in the first direction to fit with each other to clamp the respective mounting members 31 distributed in sequence in the first direction, while the holder 61 is connected to the die body 10, so that the mounting and fixing of the mounting members 31 on the die body 10 is realized. The holder 61 and the clamping plate 63 may clamp a part of each mounting part 31, i.e., the driving member 33 may be disposed in a part of the mounting member 31 that is not clamped. Alternatively, the holder 61 and the clamping plate 63 may clamp the entire mounting member 31.

**In** this embodiment, the mounting member 31 is clamped and mounted by means of the fixture 60 and the clamping plate 63, so that there is no need to provide a connecting structure for mounting the mounting member 31, which is conducive to ensuring the strength of each mounting member 31. Moreover, the fixture 60 has a structure more complicated than that of the die body 10, and the way of mounting the mounting frame onto the fixture 60 may also facilitate its mounting. Especially when a plurality of driving assemblies 30 are provided, after the respective mounting members 31 are mounted on the holder 61, this part of structure can be mounted on the die body 10 at one time, which is conducive to improving the convenience in mounting this part of structure. The present application is not limited thereto. **In** other embodiments, the respective mounting members 31 may be directly mounted on the die body 10.

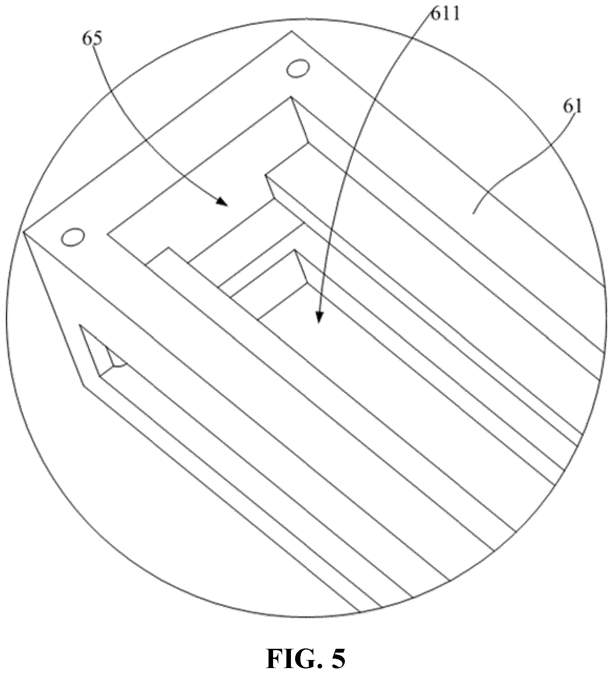

With reference to FIG. 4 and 5, in an embodiment of the present application, the holder 61 and the clamping plate 63 enclose to form a receiving cavity 65, and the receiving cavity 65 extends in the first direction; the mounting members 31 of the respective driving assemblies 30 are all received in the receiving cavity 65; the holder 61 is provided with a first clearance hole 611 communicated to the receiving cavity 65, one end of each connector 40 away from the adjusting member 20 passes through the first clearance hole 611 to be connected to the driving member 33; the clamping plate 63 is provided with a second clearance hole 631 communicated to the receiving cavity 65, and one end of the driving member 33 away from the connector 40 passes through the second clearance hole 631 to extend to the outside.

The receiving cavity 65 may be used for receiving the mounting members 31 of the respective driving assemblies 30. Therefore, in the first direction, the length of the receiving cavity 65 is the same as the overall length of the mounting members 31 such that the mounting members 31 are prevented from moving in the first direction to affect the accuracy and stability of mounting. The first clearance hole 611 may allow passage of the connector 40, so that the connector 40 is connected to the driving member 33. The second clearance hole 631 may allow passage of the driving member 33, so that a part of the driving member 33 is exposed to the outside, bringing convenience for operators to operate.

In this embodiment, the receiving cavity 65 may have an adaptively receiving effect on the mounting members 31, which facilitates the improvement of mounting stability of the mounting member 31, so that the driving assemblies 30 can carry out stable and effective driving on the adjusting member 20 subsequently. Furthermore, during mounting, the mounting members 31 are mounted in the receiving cavity 65, and accordingly the mounting members 31 can be quickly positioned, thereby improving the convenience of mounting of the driving assemblies 30. The length of the receiving cavity 65 in the first direction and the total length of the plurality of mounting members 31 in the first direction may be the same.

With reference to FIG. 4, in an embodiment of the present application, in the first direction, the length value of the mounting member 31 of each of the driving assemblies 30 is the same as the length value of the corresponding adjusting member 20.

The length value of the mounting member 31 of each of the driving assemblies 30 is the same as the length value of the corresponding adjusting member 20, that is, the mounting members 31 and the adjusting members 20 are arranged in a one-to-one correspondence, and the lengths, in the first direction, of the mounting members 31 and the adjusting members 20 corresponding thereto are consistent.

**In** this embodiment, since the mounting members 31 and the adjusting members 20 are arranged in one-to-one correspondence and their lengths are set to be the same, it can be ensured that the driving members 33 disposed on the mounting members 31 may correspond to the adjusting members 20 accurately, so that the driving members 33 can effectively adjust the adjusting members 20. Moreover, such an arrangement brings convenience for operators to quickly determine the driving member 33 to be operated according to the corresponding relationship, so as to adjust the adjusting member 20 to be adjusted.

With reference to FIGS. 2, 4 and 6, in an embodiment of the present application, the driving member 33 and the connector 40 are detachably connected.

The driving member 33 and the connector 40 are detachably connected, that is, the driving member 33 and the connector 40 can still be detached and separated from each other after they are connected. The driving member 33 and the connector 40 may be connected by threads or snap fit, etc.

In this embodiment, the driving member 33 and the connector 40 are provided in a detachable manner so that the two may be detached from each other, which is conducive to improving the convenience of maintenance or change of the respective adjusting members 20 and driving members 33.

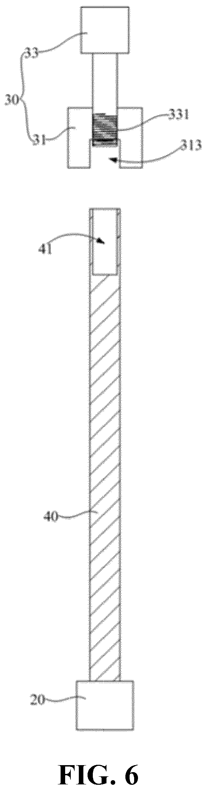

With reference to FIG.6, in an embodiment of the present application, the mounting member 31 is provided with a mounting hole 311, the driving member 33 rotatably penetrates the mounting hole 311, and one of a threaded section 331 and a threaded hole 41 is formed at one end of the driving member 33 close to the adjusting member 20; and the other of the threaded section 331 and the threaded hole 41 is formed at one end of the connector 40 away from the adjusting member 20, and the threaded section 331 is inserted into the threaded hole 41 to drive the connector 33 to move during rotation of the driving member 40.

The driving member 33 is provided with one of the threaded section 331 and the threaded hole 41, and the connector 40 is provided with the other of the threaded section 331 and the threaded hole 41. During rotation of the driving member 33, since the threaded section 331 is matched with the threaded hole 41 while the connector 40 is connected to the adjusting member 20, the connector 40 cannot rotate along with the driving member 33, and accordingly, the connector 40 can move along its axial direction and drive the adjusting member 20 connected thereto to move. The driving member 33 may be provided with the threaded section 331, and the connector 40 may be provided with the threaded hole 41. Alternatively, the driving member 33 may be provided with the threaded hole 41, and the connector 40 may be provided with the threaded section 331. The connector 40 may be of a cylinder structure and extend in the movement direction of the adjusting member 20.

In this embodiment, the driving member 33 and the connector 40 are connected by threads, so that the transmission between the driving member 33 and the connector 40 can be realized on the one hand, and the driving member 33 and the connector 40 are detachable on the other hand. This can greatly simplify structures of the driving member 33 and the connector 40, thereby improving the convenience in manufacturing them. Moreover, with such an arrangement, the driving member 33 and the connector 40 realize drive based on the pure mechanical structure, which does not involve electrical circuits or gas circuits, and accordingly is conducive to improving safety of the coating die 100 in use. It should be noted that the present application is not limited thereto. In other embodiments, when the driving member 33 is a cylinder or a linear motor, the driving member 33 and the connector 40 may be connected to each other by screws, snap fit, or magnetic adsorption.

With reference to FIG. 6, in an embodiment of the present application, when the driving member 33 is provided with the threaded 331 and the connector 40 is provided with the threaded hole 41, the mounting member 31 is further provided with a guide hole 313, the guide hole 313 is communicated to the mounting hole 311 and is coaxial with the mounting hole 311, and the end of the connector 40 provided with the threaded hole 41 is inserted into the guide hole 313.

It can be said that the mounting hole 311 is disposed on the side of the mounting member 31 away from the connector 40, the guide hole 313 is disposed on the side of the mounting member 31 close to the connector 40, and the two are coaxial and communicated to each other. The end of the driving member 33 having the threaded section 331 may extend into the guide hole 313, and similarly, the end of the connector 40 having the threaded hole 41 may also extend into the guide hole 313 and is in thread fit with the threaded section 331. Here, when the driving member 33 rotates to drive the connector 40 to move, the connector 40 may move in the guide hole 313. Since the shape of the guide hole 313 may match the shape of the connector 40, the guide hole has a guiding effect on the movement of the connector 40.

In this embodiment, the guide hole 313 may guide the movement of the connector 40, in other words, it has a guiding effect on the movement of the adjusting member 20, so that the adjusting member 20 can stably and effectively adjust the discharge flow rate of the discharge channel 1111.

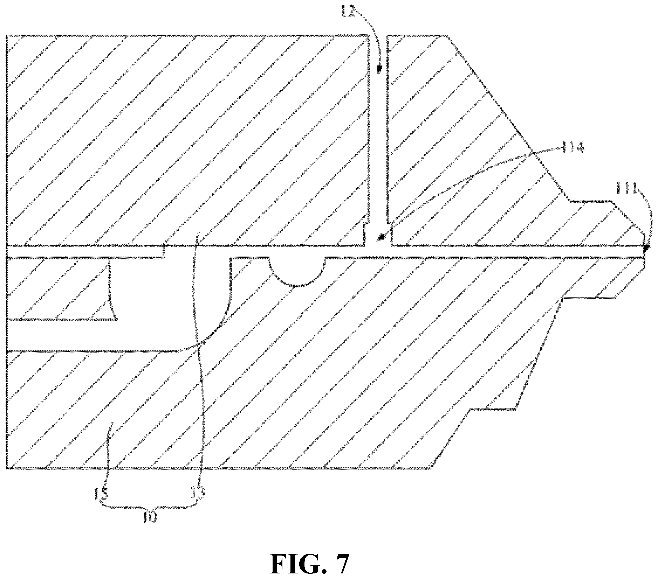

With reference to FIGS. 2 and 7, in an embodiment of the present application, a mounting groove 114 is provided on an inner wall of the discharge channel 11, the mounting groove 114 is communicated to the communicating pore 12, and the adjusting members 20 are disposed in the mounting groove 114.

The mounting groove 114 may be provided on one of two opposite inner walls of the discharge channel 11 in the movement direction of the adjusting members 20, so that the adjusting members 20 are received by the mounting groove 114. The mounting groove 114 may extend in the first direction, and the adjusting members 20 may all be disposed in the mounting groove 114.

In this embodiment, the mounting groove 114 may provide a mounting space to the adjusting members 20, thus improving the convenience of setting the adjusting members 20. Moreover, the adjusting members 20 each may have a large volume according to setting, so that the strength of the adjusting member 20 is increased and the adjusting member 20 can carry out adjustment stably.

With reference to FIG. 2, in an embodiment of the present application, the coating die 100 assembly further includes a sealing member 50, and the sealing member 50 is disposed between the adjusting member 20 and a wall of the mounting groove 114 that is communicated to the communicating pore 12.

The sealing member 50 may be used for sealing between the adjusting member 20 and the wall of the mounting groove 114 that is communicated to the communicating pore 12, where the sealing member 50 may be made of rubber or silicone, etc., so that it has a certain elasticity, and after being squeezed by the adjusting member 20, it undergoes elastic deformation and fits tightly between the adjusting member 20 and the wall of the mounting groove 114 that is communicated to the communicating pore 12. In addition, there may be one sealing member 50 for sealing between at least two adjusting members 20 and the wall of the mounting groove 114 that is communicated to the communicating pore 12. Alternatively, the number of the sealing members 50 may correspond to the number of the adjusting members 20. In this case, one sealing member 50 seals between one adjusting member 20 and the wall of the mounting groove 114 that is communicated to the communicating pore 12.

In this embodiment, the sealing member 50 has a sealing effect. By the sealing effect of the sealing member 50, the slurry can be prevented from further permeating the communicating pore 12 even if the slurry enters the mounting groove 114.

With reference to FIGS. 1 and 2, in an embodiment of the present application, the coating die 100 includes a first die 13 and a second die 15; the second die 15 is detachably connected to the first die 13, the second die 15 and the first die 13 enclose to form the discharge channel 11, and the driving assemblies 30 and the communicating pore 12 are disposed on the first die 13 and/or the second die 15.

The first die 13 and the second die 15 may be distributed in sequence in the movement direction of the adjusting member 20, and they may enclose to form the discharge channel 11 after being connected as a whole. The first die 13 and the second die 15 are detachably connected, which means that after the first die 13 and the second die 15 are connected as a whole, they can still be detached and separated. The first die 13 and the second die 15 may be connected by screws, snap fit, magnetic adsorption or any other means, as long as it is ensured that the two can be detached and separated. The driving assemblies 30 and the communicating pore 12 are disposed on the first die 13 and/or the second die 15, which means that the driving assemblies 30 and the communicating pore may be disposed only on the first die 13, or they may be disposed only on the second die 15; alternatively, both the first die 13 and the second die 15 are provided with the driving assemblies 30 and the communicating pore 12

In this embodiment, the die body 10 is divided into the first die 13 and the second die 15, so that the two can be manufactured separately, and then assembled into a whole to enclose to form the discharge channel 11. Structures of the first die 13 and the second die 15 that are manufactured separately can be simplified as compared with an overall structure, which is conducive to improving the convenience in manufacturing the die body 10. Moreover, since the first die 13 and the second die 15 are detachably connected, when the adjusting member 20 is damaged or the discharge channel 11 is blocked, the first die 13 and the second die 15 can be detached from each other, thereby improving the convenience of maintenance of the adjusting member 20 and the discharge channel 11.

With reference to FIGS. 1 to 7, in an embodiment of the present application, the coating die 100 includes a die body 10, a fixture 60, a plurality of driving assemblies 30 and a plurality of adjusting members 20. The module body includes a first die 13 and a second die 15. The second die 15 is detachably connected to the first die 13, and the second die 15 and the first die 13 enclose to form the discharge channel 11. The first die 13 is further provided with the communicating pore 12 communicated to the discharge channel 11. The fixture 60 is disposed on an outer surface of the first die 13 where the communicating pore 12 is formed. The fixture 60 includes a holder 61 and a clamping plate 63. The clamping plate 63 is detachably connected to the holder 61, and the clamping plate 63 and the holder 61 enclose to form a receiving cavity 65 that extends in the first direction. The driving assembly 30 includes a mounting member 31 and a driving member 33. The mounting members 31 of the respective driving assemblies 30 are all received in the receiving cavity 65. In the first direction, the total length of the plurality of mounting members 31 is the same as the length of the receiving cavity 65, and the plurality of mounting members 31 are clamped and fixed by the fitting of the holder 61 and the clamping plate 63. The driving member 33 is rotatably inserted into the mounting hole 311 in the mounting member 31. The clamping plate 63 is provided with a second clearance hole 631 for one end of the driving member 33 to pass through. One side of the mounting member 31 facing away from the clamping plate 63 is provided with a guide hole 313 that is communicated to the mounting hole 311 and coaxial with the mounting hole 311, and for passage of the other end. The driving member 33 extending into the guide hole 313 is further provided with a threaded section 331. A connector 40 is disposed in the communicating pore 12, and the holder 61 is provided with a first clearance hole 611 corresponding to the guide hole 313 and the communicating pore 12. One end of the connector 40 is connected to and passes through the first clearance hole 611 and then is inserted into the guide hole 313, and is provided with a threaded hole 41 matched with the threaded section 331. The other end of the connector 40 is connected to the adjusting member 20 disposed in the discharge channel 11, so that the driving member 33 can drive the connector 40 to move in the guide hole 313 during rotation, and then drive the adjusting member 20 to move in the discharge channel 11 to adjust the discharge flow rate of the discharge channel 11. Further, in the first direction, the mounting members 31 and the adjusting members 20 are in one-to-one correspondence and have the same length. A mounting groove 114 is provided on an inner wall of the discharge channel 11, the mounting groove 114 is communicated to the communicating pore 12, and the adjusting members 20 are disposed in the mounting groove 114. The coating die assembly 100 further includes a sealing member 50, and the sealing member 50 is disposed between the adjusting member 20 and a wall of the mounting groove 114 that is communicated to the communicating pore 12.

The present application further proposes a coating device, which includes a coating die 100, and the specific structure of the coating die 100 refers to the above embodiment. Since the coating device adopts all the technical solutions of all the above embodiments, it has at least all the beneficial effects brought by the technical solutions of the above embodiments, which will not be repeated herein.

The foregoing descriptions are merely some preferred embodiments of the present application, but are not intended to limit the patent scope of the present application. Any equivalent structural transformations or equivalent process transformations made under the inventive concept of the present application by using the content of the specification and accompanying drawings, or direct/indirect application of the content of the specification and accompanying drawings to other related technical fields should fall within the patent protection scope of the present application.

## Claims

1. A coating die, comprising:
a die body, wherein the die body is provided with a discharge channel communicated to the outside, and the die body is further provided with a communicating pore communicated to the discharge channel;
a plurality of driving assemblies detachably connected to the die body; and
a plurality of adjusting members, wherein at least a part of each adjusting member is disposed in the discharge channel, the plurality of adjusting members are all connected to the corresponding driving assemblies through the communicating pore respectively, the driving assemblies are used for driving the adjusting members to move in the discharge channel, and the plurality of adjusting members are arranged in a first direction, the first direction being perpendicular to a movement direction of the adjusting members.

2. The coating die of claim 1, wherein at least a part of each driving assembly is disposed on an outer surface of the die body; and
the coating die further comprises connectors disposed in the communicating pore, one end of each connector is connected to one adjusting member, the other end of the connector is connected to one driving assembly, and the driving assembly is used for driving the connector to move to drive the adjusting member to move.

3. The coating die of claim 2, wherein the driving assembly comprises:
a mounting member detachably disposed on the outer surface of the die body where the communicating pore is formed; and
a driving member connected to the mounting member and one connector and used for driving the connector to move.

4. The coating die of claim 3, wherein the coating die further comprises a fixture, and the fixture comprises:
a holder connected to the die body; and
a clamping plate detachably connected to the holder and fits with the holder to clamp the mounting members.

5. The coating die of claim 4, wherein the holder and the clamping plate enclose to form a receiving cavity, the receiving cavity extends in the first direction, and the mounting members of the respective driving assemblies are all received in the receiving cavity;
the holder is provided with a first clearance hole communicated to the receiving cavity, and one end of the connector away from the adjusting member passes through the first clearance hole to be connected to the driving member; and
the clamping plate is provided with a second clearance hole communicated to the receiving cavity, and one end of the driving member away from the connector passes through the second clearance hole to extend to the outside.

6. The coating die of any one of claims 3 to 5, wherein in the first direction, the length value of the mounting member of each of the driving assemblies is the same as the length value of the corresponding adjusting member.

7. The coating die of any one of claims 3 to 6, wherein the driving member and the connector are detachably connected.

8. The coating die of claim 7, wherein the mounting member is provided with a mounting hole, the driving member rotatably penetrates the mounting hole, and one of a threaded section and a threaded hole is formed at one end of the driving member close to the adjusting member; and
the other of the threaded section and the threaded hole is formed at one end of the connector away from the adjusting member, and the threaded section is inserted into the threaded hole to drive the connector to move during rotation of the driving member.

9. The coating die of claim 8, wherein the driving member is provided with the threaded section, and the connector is provided with the threaded hole; and
the mounting member is further provided with a guide hole, the guide hole is communicated to the mounting hole and is coaxial with the mounting hole, and the end of the connector provided with the threaded hole is inserted into the guide hole.

10. The coating die of any one of claims 1 to 9, wherein the movement direction of the adjusting member is perpendicular to a discharge direction of the discharge channel, and the first direction is perpendicular to the discharge direction of the discharge channel.

11. The coating die of any one of claims 1 to 10, wherein a mounting groove is provided on an inner wall of the discharge channel, the mounting groove is communicated to the communicating pore, and the adjusting members are disposed in the mounting groove.

12. The coating die of claim 11, wherein the coating die assembly further comprises a sealing member, and the sealing member is arranged between the adjusting member and a wall of the mounting groove that is communicated to the communicating pore.

13. The coating die of any one of claims 1 to 12, the coating die comprising:
a first die; and
a second die detachably connected to the first die, the second die and the first die enclosing to form the discharge channel, and the driving assemblies and the communicating pore being disposed on the first die and/or the second die.

14. A coating device, comprising the coating die of any one of claims 1 to 13.
